# EUROPEAN PATENT SPECIFICATION

(11) **EP 0 522 794 B1**
(45) Date of publication and mention of the grant of the patent: **26.03.1997**
(21) Application number: 92306122.0
(22) Date of filing: 02.07.1992
(51) Int. Cl.: H04N 5/232, H04N 5/335, H04N 7/087

(54) **Reference clock of an image sensor transmitted through a cable to an image processing unit**
Zu einer Bildverarbeitungseinheit kabelübertragender Bildsensorsreferenztakt
Horloge de référence d'un capteur d'image, transmise par câble à une unité de traitement d'images

(30) Priority: 06.07.1991 JP 192643/91
(43) Date of publication of application: 13.01.1993
(73) Proprietor: SONY CORPORATION, Tokyo (JP)
(72) Inventor: Morioka, Yoshihiro, c/o Patents Div., Shinagawa-ku, Tokyo 141 (JP)
(74) Representative: Cotter, Ivan John

(56) References cited:
- US-A- 4 831 444
- PATENT ABSTRACTS OF JAPAN vol. 13, no. 522 (E-849)(3870) 21 November 1989 & JP-A-1 213 075
- PATENT ABSTRACTS OF JAPAN vol. 13, no. 301 (E-785)(3649) 11 July 1989 JP-A-1 078 079
- PATENT ABSTRACTS OF JAPAN vol. 14, no. 188 (C-0710)17 April 1990 & JP-A-2 034 140
- PATENT ABSTRACTS OF JAPAN vol. 14, no. 252 (E-0934) 30 May 1990 & JP-A-2 071 676
- PATENT ABSTRACTS OF JAPAN vol. 11, no. 17 (E-471)(2464) 17 January 8761 & JP-A-61 187 470
- PATENT ABSTRACTS OF JAPAN vol. 7, no. 280 (E-216) 14 December 1983 & JP-A-58 157 261

## Description

This invention relates to video cameras.

When the number of pixels of a charge coupled device (CCD) image pick-up device is increased, the resolution of a reproduced image is improved. However, as the number of pixels increases, the problem of defective pixels also increases. An arrangement for correcting such defects is disclosed in US patent specification US-A-4910598.

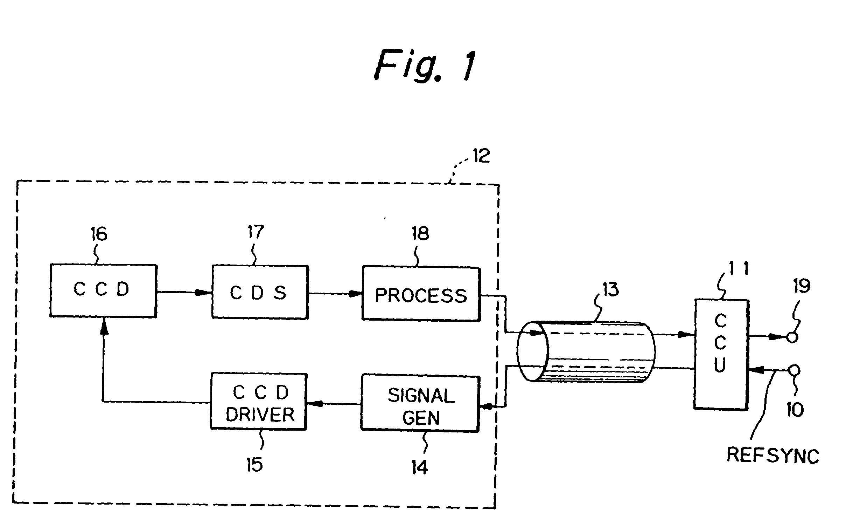

Referring to Figure 1, a reference sync signal REFSYNC is supplied from a terminal 10 to a camera control unit (CCU) 11, and thence to a signal generator 14 in a camera 12 through a transmission cable 13 which connects the camera 12 to the CCU 11.

The signal generator 14 generates a timing signal for each circuit element on the basis of the reference sync signal REFSYNC from the CCU 11. The timing signal is supplied to a CCD driver 15 where a transfer clock is derived for supply to a CCD image pick-up device 16. In response to the transfer clock, the pick-up device 16 is driven, and outputs an image pick-up signal. The output signal from the pick-up device 16 is supplied to a CDS circuit 17, which samples it and holds the sampled value. An output signal from the CDS circuit 17 is supplied to a processing circuit 18 which includes a gamma correcting circuit, a knee circuit and so forth. An output signal from the processing circuit 18 is supplied to the CCU 11 via the cable 13.

Defects may occur in pixels of the CCD image pick-up device 16. In the case of defective pixels, the preceding sampled value is output from the CDS circuit 17, so correcting effects due to the defects of the pick-up device 16.

However, in a high definition TV (HDTV) system using say 1125 scanning lines, and currently coming into use, the number of pixels of the CCD image pick-up device used is much larger than in say an NTSC television system. Therefore, the number of defective pixels is also larger. As a result, if defect correction is left to the CDS circuit 17 in the camera 12, then a heavy load is imposed on the CDS circuit 17. One solution to this problem is to provide a defect correcting circuit in the CCU 11, because more complicated signal processing is possible in the CCU 11 than in the camera 12.

To correct the effects of such pixel defects in the CCU 11, it is necessary that a signal for obtaining address information of the CCD image pick-up device 16, that is, a signal for obtaining information having the same time base as the transfer clock supplied to the pick-up device 16 in the camera 12, be supplied from the camera 12 to the CCU 11. It may be possible to use the sync signal contained in the video signal to provide this information.

However, since the frequency of the transfer clock is much higher than that of the sync signal, if the effects of pixel defects are to be corrected by the CCU 11, the accuracy of the time base is insufficient using merely the sync signal added to the video signal. In addition, stabilities of the CCD driver 15 and the process circuit 18, GEN-lock accuracy in case of a change in length of the cable 13, and stability of the signal generating circuit, etc. in the CCU 11 must be taken into consideration.

US-A-4,831,444 discloses a video camera in accordance with the pre-characterising portion of claim 1 and in which the output of a CCD is supplied directly via a cable to a signal processor for clamping and sample and hold processing. A clock pulse signal giving a reference timing of the CCD driver is transmitted separately via the cable and used to synchronise the processing means with the signal supplied from the CCD.

Patent Abstracts of Japan, vol 14, no 252 (E-0934), 30.05.90 discloses inserting a control signal in a video signal on a transmission line from an image pick-up section, and extracting the control signal from the composite signal received by a control circuit.

According to the present invention there is provided a video camera having an image pick-up section and a signal processing section to which an output signal from said image pick-up section is supplied through a transmission cable, comprising:
an image pick-up device provided in said image pick-up section; and
sample and hold processing means connected to receive an output of the said image pick-up device;
characterized in that said sample and hold processing means is provided in said image pick-up section, and in that the camera includes:
reference signal adding means, provided in said image pick-up section, arranged to add a reference clock signal indicative of the position of a reference pixel of said image pick-up device in the vertical blanking period of an output video signal of said sample and hold processing means;
extracting means, provided in said signal processing section, for extracting said reference clock signal from said output signal of said image pick-up section; and
defect correcting means, provided in said signal processing section, for performing a defective pixel correcting process on the video signal supplied in the output signal of said image pick-up device on the basis of said reference clock signal extracted by said extracting means, whereby said defect correcting means is synchronised with the video signal to be corrected.

Embodiments of the invention can thus provide a video camera which can transmit a reference signal indicative of the position of a reference pixel in a CCD image pick-up device from a camera to a CCU.

The invention will now be described by way of example with reference to the accompanying drawings, throughout which like parts are referred to by like references, and in which:
Figure 1 is a block diagram of a known video camera;
Figure 2 is a block diagram showing an embodiment of the invention;
Figure 3 is a circuit diagram showing an example of a reference signal generating circuit in the video camera shown in Figure 2;
Figures 4A to 4D are waveform diagrams for explaining the operation of the reference signal generating circuit of Figure 3; and
Figure 5 is a block diagram showing an example of a reference signal extracting circuit in a CCU of the video camera shown in Figure 2.

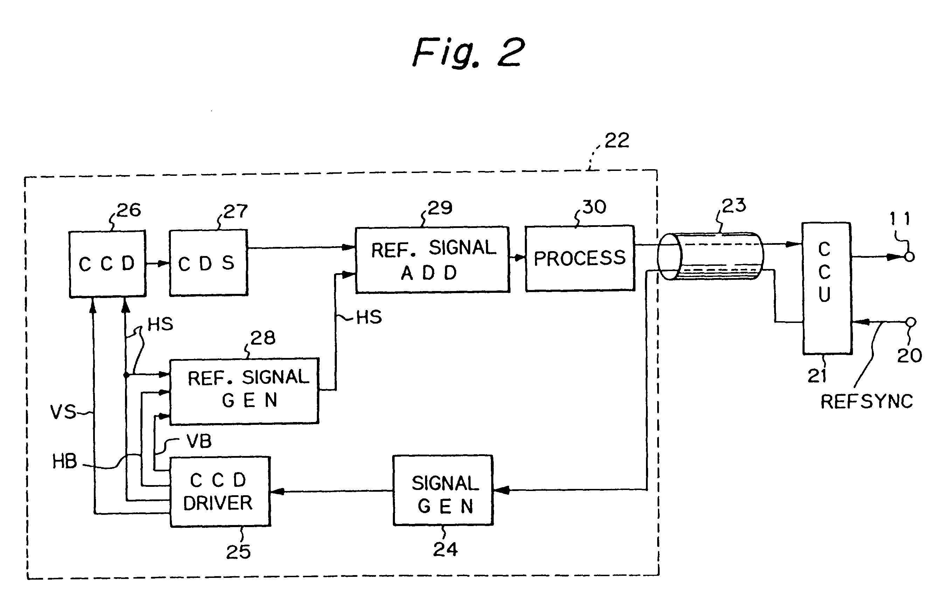

Referring to Figure 2, in the embodiment, a reference sync signal REFSYNC is supplied from a terminal 20 to a CCU 21. The reference sync signal REFSYNC is transmitted to a signal generator 24 forming part of a camera 22 via a cable 23 which connects the camera 22 to the CCU 21. The signal generator 24 generates a timing signal for each circuit element on the basis of the reference sync signal REFSYNC supplied from the CCU 21. The timing signal is fed to a CCD driver 25. The CCD driver 25 supplies a CCD image pick-up device 26 with a horizontal transfer clock HS and a vertical transfer clock VS to drive the pick-up device 26. An output signal from the pick-up device 26 is fed to a CDS circuit 27, and it is sampled and held there. The video signal output from the CDS circuit 27 is supplied to a reference signal adding circuit 29.

The horizontal transfer clock HS, a horizontal blanking pulse HB and a vertical blanking pulse VB are supplied from the CCD driver 25 to a reference signal generating circuit 28. In one horizontal interval of the vertical blanking period, the transfer clock HS used as a reference signal is output from the reference signal generating circuit 28. The output signal from the reference signal generating circuit 28 is supplied to the reference signal adding circuit 29.

In the reference signal adding circuit 29, the transfer clock HS from the reference signal generating circuit 28 is added to the output signal from the CDS circuit 27. The transfer clock HS is added, for example, in a 1H interval of the vertical blanking period of the video signal. An output signal from the reference signal adding circuit 29 undergoes various controls by a processing circuit 30, and is then supplied to the CCU 21 via the cable 23.

The horizontal transfer clock HS and the vertical transfer clock VS supplied to the CCD image pick-up device 26 are in the relation of 1:1 with the address of a pixel of the pick-up device 26. Therefore, by supplying to the CCU 21 the transfer clock HS output from the reference signal generating circuit 28 and added to the video signal, information on the address of the pixel of the pick-up device 26 is obtained at the CCU 21.

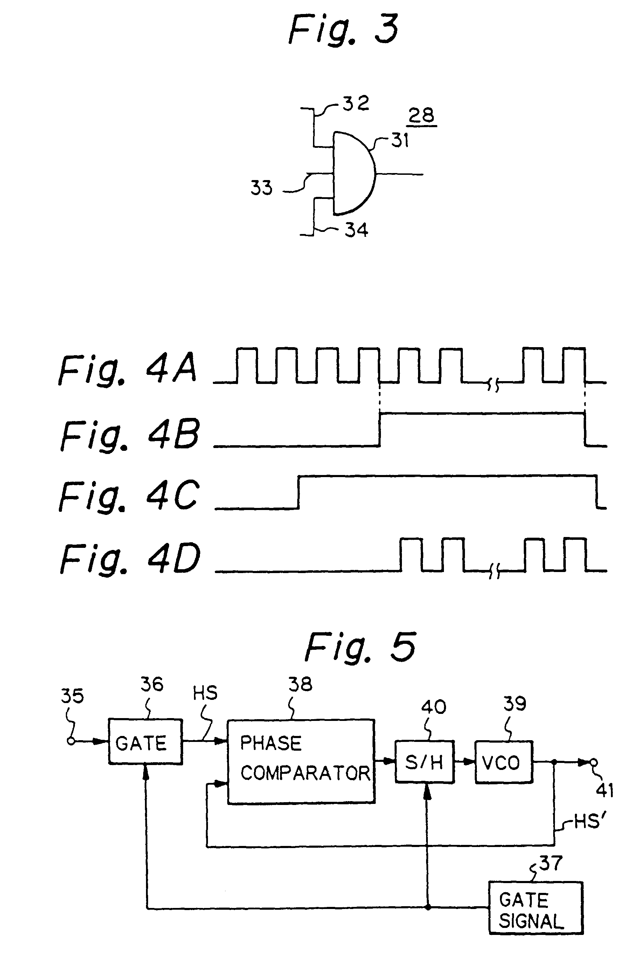

The reference signal generating circuit 28 may be in the form of an AND gate 31 having three input terminals as shown in Figure 3. The AND gate 31 is supplied with the horizontal transfer clock HS (see Figure 4A) through a first input terminal 32, the horizontal blanking pulse HB (see Figure 4B) through a second input terminal 33, and the vertical blanking pulse VB (see Figure 4C) through a third input terminal 34. From the AND gate 31, as shown in Figure 4D, the transfer clock HS used as a reference signal is taken out in a 1h interval of the vertical blanking period.

Figure 5 shows an example of the circuit in the CCU 21 for generating a highly accurate reference signal from the transfer clock HS supplied to the CCU 21 from the camera 22 in a 1h interval of the vertical blanking period. In Figure 5, the video signal from the camera 22 is supplied through an input terminal 35 to a gate circuit 36. The video signal is accompanied by the transfer clock HS in a 1H interval of the vertical blanking period. A gate signal is output from a gate signal generating circuit 37 at the incoming timing of the transfer clock, and it is supplied to the gate circuit 36. The gate circuit 36 passes only the transfer clock HS to a phase comparator 38. The phase comparator 38 is supplied with an output signal from a voltage controlled oscillator (VCO) 39. An output signal from the phase comparator 38 is supplied to the VCO 39 via a sample-hold circuit 40. An output signal from the VCO 39 is supplied to a terminal 41.

Note here that the output signal HS' from the VCO 39 is fed back to the phase comparator 38. So long as the transfer clock HS is supplied, the phase comparator 38 compares the phase of the transfer clock HS output from the gate circuit 36 with the phase of the output signal HS' from the VCO 39. A difference of the phase-compared signals (HS and HS') is supplied to the VCO 39 through the sample-hold circuit 40. The oscillating frequency of the VCO 39 is controlled on the basis of a difference signal from the sample-hold circuit 40. When the transfer clock HS is not supplied, the VCO 39 is controlled by the difference signal held in the sample-hold circuit 40. Therefore, the same continuous clock as the horizontal transfer clock HS supplied to the CCD image pick-up device 26 is obtained from the terminal 41.

By A/D-converting the video signal supplied from the camera 22 to the CCU 21 by using the transfer clock, thus obtained, each pixel can be properly sampled and A/D-converted. In addition, by processing the first pulse of the output signal as a horizontal address such as, for example, a first address or a specific address of the CCD image pickup device 26, each pixel address can be properly reproduced in the CCU 21. On the basis of the address, a defect correcting process is performed for the image pick-up signal in the defect correcting circuit provided in the CCU 21.

The embodiment described above adds the output signal from the reference signal generating circuit 28 in a 1H interval of the vertical blanking period. However, the invention is not limited to this. In addition, when the video camera according to the invention is used as an instrument for measuring the position of an object, the optical position of a CCD imaging surface can be measured properly.

Thus in embodiments of the invention, a signal corresponding to a pixel address of a CCD image pick-up device is added to a video signal and transferred from the camera to the CCU. By using the signal, information on the pixel address of the CCD image pick-up device can be obtained at the CCU. Since the information is sent through the same transfer path as that of the video signal, the time base coincides with that of the video signal with a high accuracy. By using information, thus obtained, defects of the CCD image pick-up device can be corrected, for example, at the CCU.

## Claims

1. A video camera having an image pick-up section (22) and a signal processing section (21) to which an output signal from said image pick-up section (22) is supplied through a transmission cable (23), comprising:
an image pick-up device (26) provided in said image pick-up section (22); and
sample and hold processing means (27) connected to receive an output of the said image pick-up device (26);
characterized in that said sample and hold processing means (27) is provided in said image pick-up section (22), and in that the camera includes:
reference signal adding means (28, 29), provided in said image pick-up section (22), arranged to add a reference clock signal indicative of the position of a reference pixel of said image pick-up device (26) in the vertical blanking period of an output video signal of said sample and hold processing means (27);
extracting means (36 to 40), provided in said signal processing section (21), for extracting said reference clock signal from said output signal of said image pick-up section (22); and
defect correcting means, provided in said signal processing section (21), for performing a defective pixel correcting process on the video signal supplied in the output signal of said image pick-up device (26) on the basis of said reference clock signal extracted by said extracting means (36 to 40), whereby said defect correcting means is synchronised with the video signal to be corrected.

2. A video camera according to claim 1 wherein said reference signal adding means (28, 29) comprises:
reference signal generating means (28) for generating the reference clock signal on the basis of a horizontal transfer clock signal, a horizontal blanking pulse and a vertical blanking pulse which are supplied from image pick-up device driving means (25); and
adding means (29) for adding said reference clock signal to the output signal of said sample and hold processing means (27).

3. A video camera according to claim 1 or claim 2 wherein said image pick-up device (26) is a CCD.

## Patentansprüche

1. Videokamera mit einem Bildwandlerteil (22) und einem Signalverarbeitungsteil (21), dem über ein Übertragungskabel (13) ein Ausgangssignal des Bildwandlerteils (22) zugeführt wird,
mit einer in dem Bildwandlerteil (22) angeordneten Bildwandlervorrichtung (26)
sowie mit einer Abtast- und Halteeineinrichtung (27), die so angeordnet ist, daß sie das Ausgangssignal der Bildwandlervorrichtung (26) aufnimmt,
**dadurch gekennzeichnet,**
daß die Abtast- und Halteeineinrichtung (27) in dem Bildwandlerteil (22) angeordnet ist und daß die Kamera aufweist:
eine in der Bildwandlerteil (22) angeordnete Referenzsignal-Einfügungseinrichtung (28, 29), die so angeordnet ist, daß sie in die vertikale Austastperiode des Ausgangssignals der Abtast- und Halteeineinrichtung (27) ein Referenztaktsignal einfügt, das für die Position eines Referenzpixels der Bildwandlervorrichtung (26) kennzeichnend ist,
eine in dem Signalverarbeitungsteil (21) angeordnete Extrahiereinrichtung (36 bis 40) zum Extrahieren des Referenztaktsignals aus dem Ausgangssignal des Bildwandlerteils (22) und
eine in dem Signalverarbeitungsteil (21) angeordnete Fehlerkorrektureinrichtung zur Durchführung einer fehlerhafte Pixel betreffenden Korrektur an dem in dem Ausgangssignal der Bildwandlervorrichtung (26) gelieferten Videosignal auf der Basis des von der Extrahiereinrichtung (36 bis 40) extrahierten Referenztaktsignals, so daß die Fehlerkorrektureinrichtung mit dem zu korrigierenden Videosignal synchronisiert wird.

2. Videokamera nach Anspruch 1, in der eine Referenzsignal-Einfügungseinrichtung (28, 29) aufweist:
eine Referenzsignal-Generatoreinrichtung (28) zur Erzeugung des Referenztaktsignals auf der Basis eines horizontalen Transfer-Taktsignals, eines horizontalen Austastimpulses und eines vertikalen Austastimpulses, die von der Treibereinrichtung (25) der Bildwandlervorrichtung zugeführt werden, und
eine Einfügungseinrichtung (29) zum Einfügen des Referenztaktsignals in das Ausgangssignal der Abtast- und Halteeineinrichtung (27).

3. Videokamera nach Anspruch 1 oder 2, in der die Bildwandlervorrichtung (26) eine ladungsgekoppelte Vorrichtung (CCD) ist.

## Revendications

1. Caméra vidéo comportant une section d'analyse d'image (22) et une section de traitement de signal (21) à laquelle on délivre un signal de sortie de ladite section d'analyse d'image (22), par un câble de transmission (23), comprenant :
un dispositif analyseur d'image (26) situé dans ladite section d'analyse d'image (22) ; et
un moyen de traitement d'échantillonnage et de maintien (27) raccordé pour recevoir une sortie dudit dispositif analyseur d'image (26) ;
caractérisé en ce que ledit moyen de traitement d'échantillonnage et de maintien (27) est disposé dans ladite section d'analyse d'image (22), et en ce que la caméra comprend :
un moyen d'ajout de signal de référence (28, 29), disposé dans ladite section d'analyse d'image (22), conçu pour ajouter un signal d'horloge de référence indiquant la position d'un pixel de référence dudit dispositif analyseur d'image (26), dans la période de suppression de trame d'un signal vidéo de sortie dudit moyen de traitement d'échantillonnage et de maintien (27) ;
un moyen d'extraction (36 à 40), disposé dans ladite section de traitement de signal (21), pour extraire ledit signal d'horloge de référence dudit signal de sortie de ladite section d'analyse d'image (22) ; et
un moyen de correction de défauts, disposé dans ladite section de traitement de signal (21), pour effectuer un traitement de correction de pixel défectueux sur le signal vidéo délivré dans le signal de sortie dudit dispositif analyseur d'image (26) sur la base dudit signal d'horloge de référence extrait par ledit moyen d'extraction (36 à 40), en synchronisant ainsi ledit moyen de correction de défauts avec le signal vidéo à corriger.

2. Caméra vidéo selon la revendication 1, dans laquelle ledit moyen d'ajout de signal de référence (28, 29) comprend :
un moyen générateur de signal de référence (28) pour produire le signal d'horloge de référence sur la base d'un signal d'horloge de transfert horizontal, d'une impulsion de suppression de ligne et d'une impulsion de suppression de trame qui sont délivrés par un moyen d'attaque de dispositif analyseur d'image (25) ; et
un moyen d'ajout (29) pour ajouter ledit signal d'horloge de référence au signal de sortie dudit moyen de traitement d'échantillonnage et de maintien (27).

3. Caméra vidéo selon la revendication 1 ou la revendication 2, dans laquelle ledit dispositif analyseur d'image (26) est un CCD (dispositif à couplage de charges).
